# EUROPEAN PATENT SPECIFICATION

(11) **EP 2 281 440 B1**
(45) Date of publication and mention of the grant of the patent: **27.06.2012**
(21) Application number: 10170782.6
(22) Date of filing: 26.07.2010
(51) Int. Cl.: A01G 3/053

(54) **Gardening trimmer**
Heckenschere
Taille-haie

(30) Priority: 05.08.2009 JP 2009182746
(43) Date of publication of application: 09.02.2011
(73) Proprietor: Makita Corporation, Anjo-shi, Aichi-ken 446-8502 (JP)
(72) Inventor: Kamiya, Takahiro, Anjo-shi Aichi 446-8502 (JP)
(74) Representative: Kramer - Barske - Schmidtchen

(56) References cited:
- DE-A1-102009 014 096
- JP-A- 2005 341 885
- US-A- 3 959 878

## Description

The present invention relates to a gardening trimmer, particularly relates to a gardening trimmer capable of using two types of blade assemblies.

As disclosed in Japanese Patent Application Publication No. 2005-341885 and Japanese Patent Application Publication No. 2007-151437, a gardening trimmer configured capable of using two types of blade assemblies is known. This kind of gardening trimmer comprises a main body, and two types of blade assemblies. The two types of blade assemblies respectively comprise pair of shear blades, and are detachably attached to the main body. The main body is provided with a prime mover and a cam member. The cam member is rotatably driven by the prime mover, and reciprocates the pair of shear blades of the blade assembly attached to the main body.

The cam member is provided with three cams; namely, first, second and third cams. With this kind of gardening trimmer, when the first type blade assembly is attached to the main body, the first and second cams are connected to that pair of shear blades, and when the second type blade assembly is attached to the main body replacing the first type blade assembly, the second and third cams are connected to those shear blades.

With this gardening trimmer, a single cam member is commonly used for the two types of blade assemblies. According to this structure, it is not necessary to prepare an exclusive cam member for each type of blade assembly. In addition, since a single cam (second cam) is commonly used between the two types of blade assemblies, the number of cams to be provided to the cam member can be reduced.

Nevertheless, in the foregoing gardening trimmer, it is difficult to dispose the three cams in the cam member in a balanced manner. The reason for this is because the first and second cams need to be disposed on the opposite sides of each other with respect to the rotation axis of the cam member. In addition, the second and third cams need to be mutually offset in the opposite direction with respect to the rotation axis of the cam member. Consequently, among the three cam members, two cams, namely the first and third cams, are disposed in the same direction with respect to the rotation axis of the cam member. With this structure, the center of gravity of the cam member may be biased toward one direction with respect to the rotation axis. An ill-balanced cam member will generate undesirable vibration and noise when it is rotatably driven by a motor.

It is an object of the present teachings to improve a balance of a cam member of a gardening trimmer configured capable of using two types of blade assemblies.

In a preferable embodiment of the present teachings, a gardening trimmer comprises a main body, a prime mover and a cam member disposed in the main body, a first type blade assembly, and a second type blade assembly. Each of the first and second type blade assemblies comprises a pair of shear blades and is configured to be detachably attached to the main body in substitute of the other. The cam member is configured to be rotatably driven by the prime mover and causes the pair of shear blades of the first or second type blade assembly attached to the main body to reciprocate.

The cam member preferably comprises four cams including a first cam, a second cam, a third cam and a fourth cam. The first and second cams are configured to be connected with the pair of shear blades of the first type blade assembly when the first type blade assembly is attached to the main body. The third and fourth cams are configured to be connected with the pair of shear blades of the second type blade assembly when the second type blade assembly is attached to the main body.

In this gardening trimmer, the four cams; namely, the first, second, third and fourth cams are provided to the cam member. The first and second cams may be disposed on the opposite sides of each other with respect to the rotation axis of the cam member. The third and fourth cams may be disposed on the opposite sides of each other with respect to the rotation axis of the cam member. According to this arrangement, the weights of the first and second cams will be negated by each other, and the weights of the third and fourth cams will be negated by each other. Consequently, the balance of the cam member is improved and the generation of undesirable vibration and noise may be avoided.

Fig. 1 shows a gardening trimmer of an embodiment together with a hedge blade assembly;

Fig. 2 shows the gardening trimmer of an embodiment together with a lawn blade assembly;

Fig. 3 shows a bottom cover;

Fig. 4 shows a cross section of the gardening trimmer attached with the hedge blade assembly;

Fig. 5 shows a cross section of the gardening trimmer attached with the lawn blade assembly;

Fig. 6A shows a top view of a cam member, Fig. 6B shows a lateral cross section of the cam member, and Fig. 6C shows a bottom view of the cam member;

Fig. 7 is a diagram sterically showing the cam member;

Fig. 8 shows a part of shear blades of the hedge blade assembly;

Fig. 9 shows the hedge blade assembly attached to a main body;

Fig. 10 shows a state where the hedge blade assembly is removed from the main body;

Fig. 11 shows a fixation screw and a retaining member of the hedge blade assembly;

Fig. 12 is a diagram showing shear blades of the lawn blade assembly;

Fig. 13 shows the lawn blade assembly attached to the main body;

Fig. 14 shows a state where the lawn blade assembly is removed from the main body;

Fig. 15 shows a modified example of the fixation screw and the retaining member of the hedge blade assembly; and

Fig. 16 shows the hedge blade assembly of a modified example attached to the main body.

In embodiments of the present teachings, the diameter of the respective cams can be freely designed in the cam member in accordance with the structure or operation of the corresponding shear blades. Specifically, the diameters of the four cams do not need to be the same, and may be different from one another. However, if the diameters of the four cams are different, then the masses of the four cams will also be different. If the masses of the four cams are different, the balance of the cam member may be spoiled. For addressing this problem, it would be effective to increase the thickness of the cam with a small diameter. Contrarily, the thickness of the cam with a large diameter may be decreased.

In an aspect of the above-mentioned teachings, it is preferable to design at least one cam among the first, second, third and fourth cams to have a smaller diameter and greater thickness in comparison to at least one of the other cams.

In one embodiment of the present teachings, preferably, the main body comprises a rotation member configured to be rotatably driven by the prime mover. In this case, the cam member may be coaxially fixed to an end face of the rotation member in a first arrangement in which the third and fourth cams face the rotation member when the first type blade assembly is attached to the main body. Moreover, the cam member may be coaxially fixed to the end face of the rotation member in a second arrangement in which the first and second cams face the rotation member when the second type blade assembly is attached to the main body.

When the four cams are provided in the cam member, the size of the cam member will increase and the space required for disposing the cam member will also expand. Thus, in one embodiment of the present teachings, the rotation member may preferably have a recess formed on its end face. In this case, the rotation member may preferably house the third cam and the fourth cam in the recess when the cam member is fixed to the rotation member in the first arrangement. Moreover, the rotation member may preferably house the first cam and the second cam in the recess when the cam member is fixed to the rotation member in the second arrangement. According to this structure, the two cams that are not used are housed in the recess of the rotation member and the space required for disposing the cam member can be reduced.

In one embodiment of the present teachings, it is preferable that a thin-walled portion is partly formed in at least one of the first, second, third and fourth cams. By forming a thin-walled portion in the cam, the mass of that cam can be adjusted. Accordingly, by selectively forming a thin-walled portion on one or more of the four cams and adjusting the mass of the respective cams, the overall mass balance of the cam member can be finely adjusted.

In one embodiment of the present teachings, the first type blade assembly is a hedge blade assembly that is primarily used for trimming hedges, and the second type blade assembly is a lawn blade assembly that is primarily used for trimming lawn. Nevertheless, the hedge blade assembly is not limited to trimming the hedges, and may also be used for trimming other trees. Similarly, the lawn blade assembly is not limited to trimming the lawn, and may also be used for trimming other plants.

In one embodiment of the present teachings, the pair of shear blades of the blade assembly is supported in a slidable or swingable manner. The base end part of the respective shear blades is provided with an engaging hole to which a corresponding cam of the cam member is engaged. The engaging hole is formed in an oval shape, and its long diameter direction is orthogonal to the direction in which the shear blades slide or swing. Consequently, the respective shear blades are configured to reciprocate pursuant to the rotation of the cam member.

In one embodiment of the present teachings, the first and second cams can be arranged at opposite sides of each other with respect to a rotation center of the cam member, and the third and fourth cams can be arranged at opposite sides of each other with respect to the rotation center of the cam member. Moreover, one of the first and second cams and one of the third and fourth cams can be arranged at a same side with respect to the rotation center of the cam member, and the other of the first and second cams and the other of the third and fourth cams can be arranged at a same side with respect to the rotation center of the cam member.

In one embodiment of the present teachings, the first and second cams can be arranged at the opposite sides of each other with respect to the rotation center of the cam member, and the third and fourth cams can be arranged at the opposite sides of each other with respect to the rotation center of the cam member. Moreover, the first, second, third and fourth cams can be arranged equiangularly along a circumferential direction.

In one embodiment of the present teachings, the cam member may comprise the four cams; namely, the first, second, third and fourth cams, and a plate member. The first and second cams are provided to one side of the plate member, and the third and fourth cams are provided to the other side of the plate member. The plate member will come in contact with the end face of the rotation member and stabilize the cam member regardless of whether the cam member is attached to the rotation member in the first arrangement or the second arrangement.

In one embodiment of the present teachings, a linear groove that extends in a straight line may be formed at the head part of the fixation screw. A coin-shaped member can be inserted into the linear groove, and the user can use the coin-shaped member and easily rotate the fixation screw.

### (Embodiment)

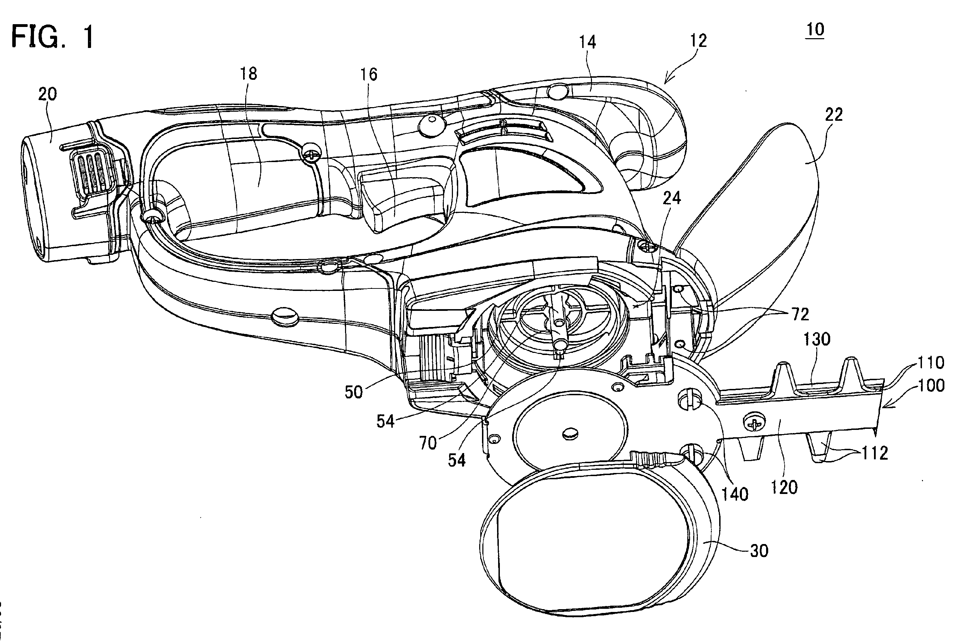

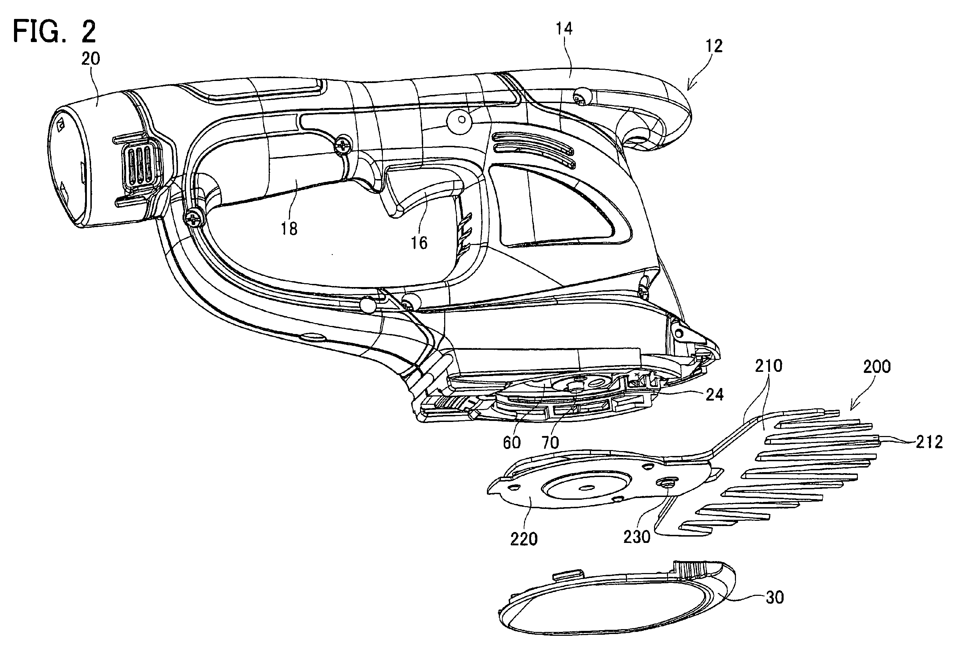

The gardening trimmer 10 of an embodiment of this invention is now explained with reference to the attached drawings. Fig. 1 and Fig. 2 show the external view of the gardening trimmer 10. The gardening trimmer 10 comprises a main body 12 shown in Fig. 1 and Fig. 2, a hedge blade assembly 100 shown in Fig. 1, and a lawn blade assembly 200 shown in Fig. 2. With the gardening trimmer 10, the blade assemblies 100, 200 can be replaced according to the work involved, and the hedge blade assembly 100 can be used upon trimming hedges and the lawn blade assembly 200 can be used upon trimming lawns.

The respective blade assemblies 100, 200 are foremost explained. As shown in Fig. 1, the hedge blade assembly 100 comprises a pair of shear blades 110, and a lower plate 120 and an upper plate 130 for retaining the pair of shear blades 110. The pair of shear blades 110 is slidably supported by being sandwiched between the lower plate 120 and the upper plate 130. Each of the shear blades 110 is formed with blade edges 112 arranged in a comb-like shape along a sliding direction of the blades. The pair of shear blades 110 cuts the branches and leaves of the hedges with its blade edge 112 by relatively reciprocating.

Moreover, the hedge blade assembly 100 is provided with two fixation screws 140 for fixing the hedge blade assembly 100 to the main body 12. The fixation screws 140 fix the hedge blade assembly 100 to the main body 12 by being screwed into the main body 12. The main body 12 is provided with two nuts 72 for receiving the fixation screws 140 respectively. The hedge blade assembly 100 is fixed to the main body 12 not only with the fixation screws 140, but also by being retained with a bottom cover 30 described later.

As shown in Fig. 2, the lawn blade assembly 200 comprises a pair of shear blades 210, and a lower plate 220 and a support pin 230 for retaining the pair of shear blades 210. The pair of shear blades 210 is fixed to the lower plate 220 by a support pin 230, and is supported in a swingable manner. The respective shear blades 210 are each formed with blade edges 212 arranged in a comb-liked shape along a swing direction of the blades. The pair of shear blades 210 cuts the lawn with its blade edges 212 by relatively reciprocating.

Note that the fixation screws 140 are not provided to the lawn blade assembly 200 as with the hedge blade assembly 100. Since the lawn blade assembly 200 is shorter than the hedge blade assembly 100, it can be firmly fixed to the main body 12 only with the bottom cover 30 described later.

The main body 12 is now explained. As shown in Fig. 1 and Fig. 2, the main body 12 comprises a housing 14. The housing 14 is provided with a trigger 16 as an activation switch, a grip part 18 to be gripped by a user, a battery pack 20 as a power source, a chip guard 22 for preventing the scattering of chips, and so on. Hereinbelow, unless specifically explained independently, a collective description will be given regarding the attachment and detachment of the blade assemblies 100 and 200. Expression such as "the blade assemblies 100, 200 are attached to the main body 12" may be used hereinbelow, but it should be noted that such is merely a collective expression, and is intended to mean that the blade assembly 100 can be attached to the main body 12 and the blade assembly 200 can be attached to the main body 12. It is not intended to mean that the blade assemblies 100, 200 can be attached simultaneously to the main body 12. In a similar manner, expression such as "the cam member 60 is connected to the pair of shear blades 110, 210 of the blade assemblies 100, 200" is intended to mean that the cam member 60 can be connected to the pair of shear blades 110, 210 respectively and independently.

The bottom part of the housing 14 is formed with an opening 24 to which the blade assemblies 100, 200 are attached. The hedge blade assembly 100 and the lawn blade assembly 200 can be detachably attached to the opening 24 of the housing 14. A bottom cover 30 is attached to the opening 24 of the housing 14 after the blade assemblies 100, 200 are attached. In the case of the hedge blade assembly 100, the fixation screws 140 are tightened before attaching the bottom cover 30. As will be described in detail later, the fixation screws 140 can each be tightened or loosened with a coin or a coin-shaped member without requiring a tool such as a screw driver.

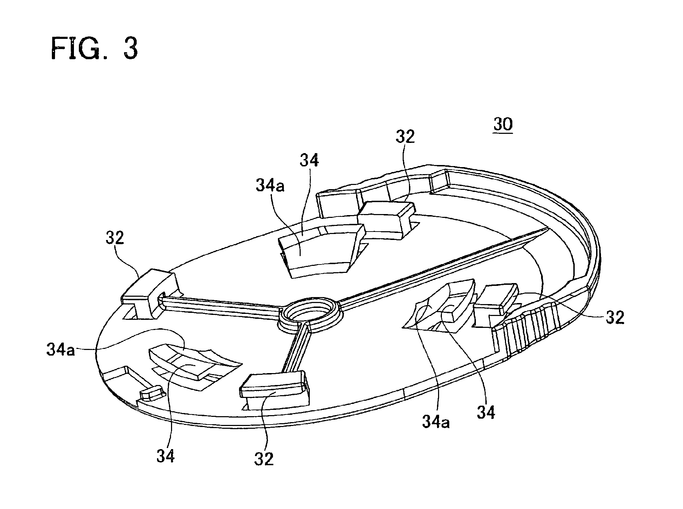

Fig. 3 shows the bottom cover 30. The bottom cover 30 is provided with claw parts 32 at four locations for engaging with the housing 14, and blade supporting parts 34 at three locations for supporting the blade assemblies 100, 200. When the bottom cover 30 is attached, the bottom cover 30 is rotated in one direction relative to the housing 14 in a state where the bottom cover 30 is fitted into the opening 24 of the housing 14. Consequently, the claw parts 32 at the four locations of the bottom cover 30 are engaged with the housing 14, and the bottom cover 30 is fixed to the housing 14. When the bottom cover 30 is fixed to the housing 14, the blade supporting parts 34 of the bottom cover 30 come in contact with the blade assemblies 100, 200 attached to the main body 12. The blade supporting parts 34 are each formed with an inclined surface 34a, and the blade assemblies 100, 200 are thereby fixed at a proper position. Meanwhile, when removing the bottom cover 30, the bottom cover 30 is rotated in the opposite direction relative to the housing 14. Consequently, the engagement of the claw parts 32 of the bottom cover 30 and the housing 14 will be released. A tool such as the screw driver is not required for the attachment and detachment of the bottom cover 30. With the gardening trimmer 10, the blade assemblies 100, 200 can be replaced with one another without having to use a tool.

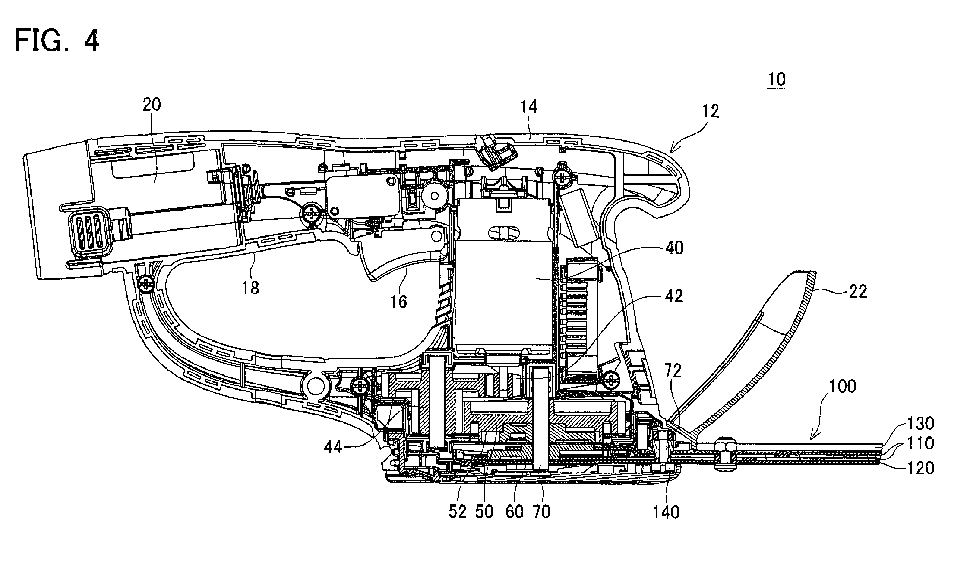

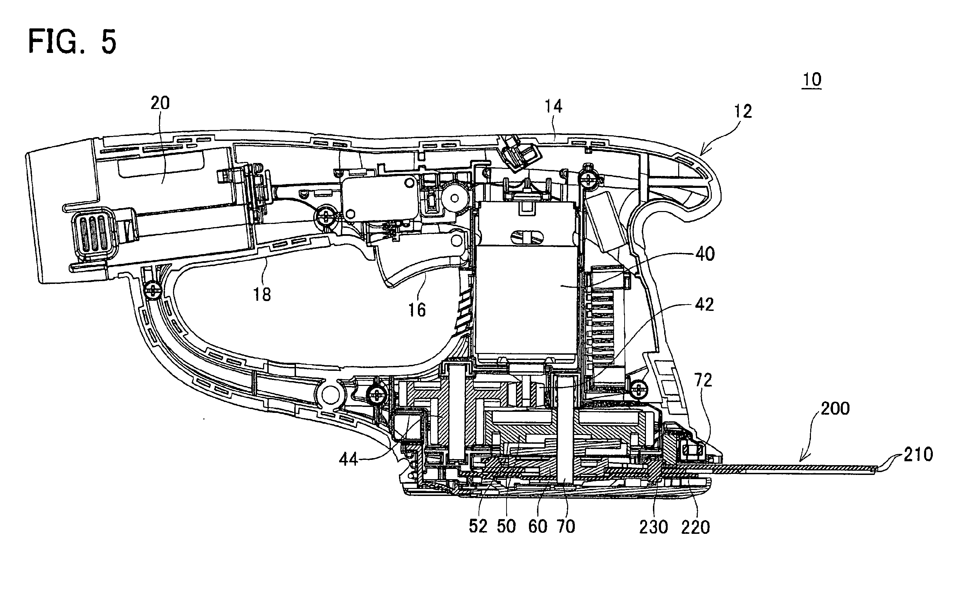

The internal structure of the main body 12 is now explained. Fig. 4 and Fig. 5 are cross sections showing the internal structure of the gardening trimmer 10. Here, Fig. 4 shows a state where the hedge blade assembly 100 is attached, and Fig. 4 shows a state where the lawn blade assembly 200 is attached. As shown in Fig. 4 and Fig. 5, the main body 12 comprises a motor 40 as a prime mover of the gardening trimmer 10, a motor pinion 42 provided to the motor 40, a double gear 44 engaged with the motor pinion 42, and a final gear 50 engaged with the double gear 44. A recess 52 for partially housing the cam member 60 described later is formed at the end face on the lower side of the final gear 50.

The motor 40 is electrically connected to the battery pack 20 via the trigger 16. When the user operates the trigger 16, the motor 40 is rotated by the power from the battery pack 20. When the motor 40 is rotated, the final gear 50 is rotatably driven via the motor pinion 42 and the double gear 44. The final gear 50 is supported by a shaft 70, and rotates around the shaft 70. As described above, the final gear 50 is a rotation member that is rotatably driven by the motor 40.

The cam member 60 is fixed to the end face of the lower side of the final gear 50 in a manner such that relative rotation is not possible. The cam member 60 is coaxially fixed to the final gear 50, and rotates together with the final gear 50 around the shaft 70. Specifically, the cam member 60 is rotatably driven together with the final gear 50 by the motor 40. As shown in Fig. 1, the end face of the lower side of the final gear 50 is provided with two connecting pins 54 for retaining the cam member 60 such that the relative rotation is not possible (not shown in Fig. 4 and Fig. 5). Note that the cam member 60 can be attached to and detached from the final gear 50, and the cam member 60 can be removed from the final gear 50 by removing the blade assemblies 100, 200 from the main body 12.

As will be described in detail later, the cam member 60 is connected to the pair of shear blades 110 or 210 of the blade assembly 100 or 200 attached to the main body 12. The cam member 60 reciprocates the connected pair of shear blades 110 or 210 by being rotated. Here, the pair of shear blades 110 or 210 reciprocates with a mutual phase difference of 180 degrees. The cam member 60 is attached to the final gear 50 in an opposite arrangement between when the hedge blade assembly 100 is attached to the main body 12 and when the lawn blade assembly 200 is attached to the main body 12.

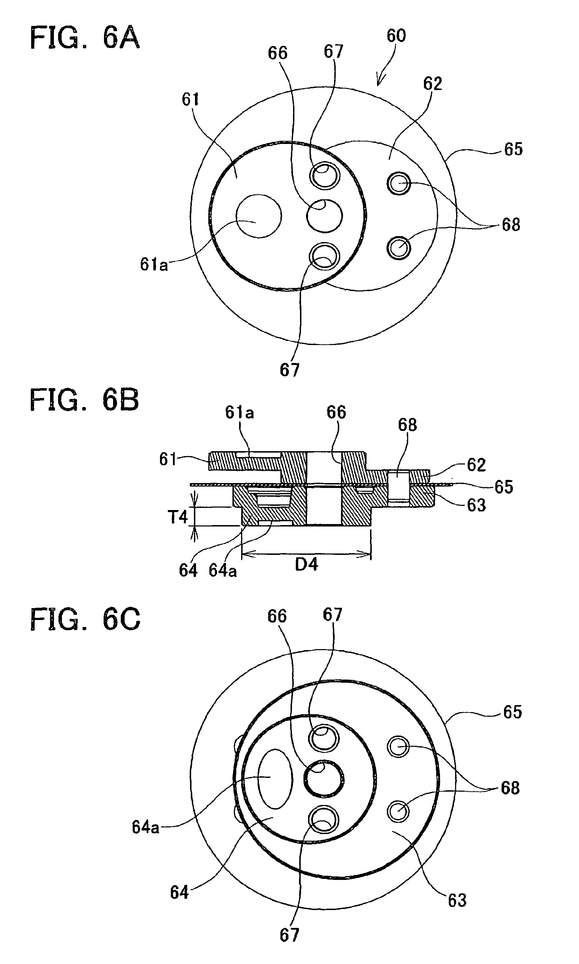

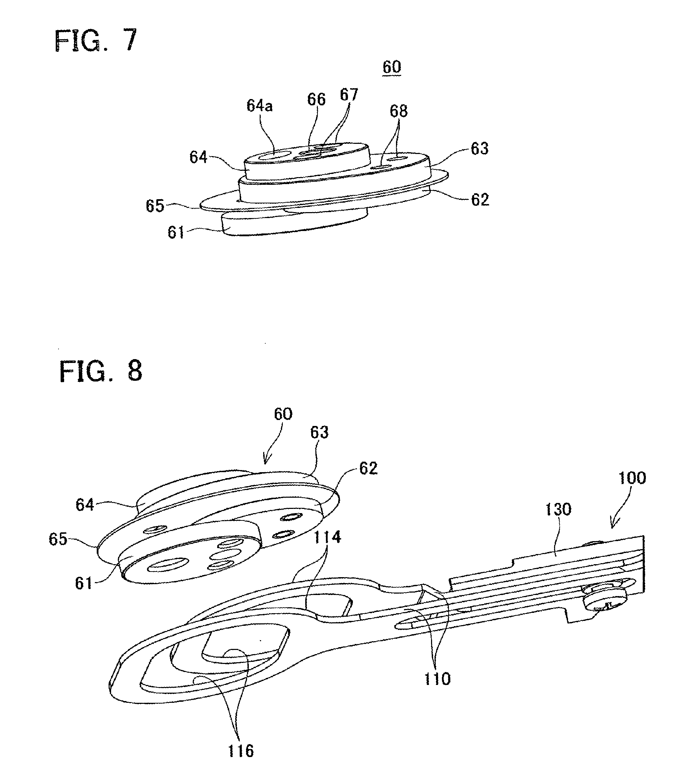

The structure of the cam member 60 is now explained in detail with reference to Fig. 6 and Fig. 7. As shown in Fig. 6 and Fig. 7, the cam member 60 comprises four cams; namely, a first cam 61, a second cam 62, a third cam 63, and a fourth cam 64. As will be described in detail later, the first cam 61 and the second cam 62 are cams to be connected to the pair of shear blades 110 of the hedge blade assembly 100, and the third cam 63 and the fourth cam 64 are cams to be connected to the pair of shear blades 210 of the lawn blade assembly 200.

Each of the cams 61, 62, 63, 64 is formed in a discoid shape, and laminated in the order of the first cam 61, the second cam 62, the third cam 63, and the fourth cam 64. Moreover, an intermediate plate 65 as a disk member is provided between the second cam 62 and the third cam 63. The cam member 60 is formed with a central hole 66 for receiving the shaft 70 of the main body 12, and a pin insertion hole 67 for receiving the connecting pin 54 of the final gear 50. Accordingly, the position of the central hole 66 shows the rotational center of the cam member 60. The four cams 61, 62, 63, 64 and the intermediate plate 65 are mutually linked with two coupling pins 68.

The first cam 61 and the second cam 62 are mutually offset in the opposite direction relative to the central hole 66. Moreover, the third cam 63 and the fourth cam 64 are mutually offset in the opposite direction relative to the central hole 66. Accordingly, two cams each are disposed in mutually opposite directions relative to the central hole 66 in the cam member 60. The mass balance of the cam member 60 is thereby maintained. Since the mass balance of the cam member 60 is favorable, the generation of undesirable vibration and noise during the operation of the gardening trimmer 10 can be inhibited.

As a modified example, the direction of offsetting the first cam 61 and the second cam 62 relative to the central hole 66 and the direction of offsetting the third cam 63 and the fourth cam 64 relative to the central hole 66 can be designed to be orthogonal with respect to each other. In this case also, since the four cams will be disposed in 90-degrees intervals relative to the central hole 66, the mass balance of the cam member 60 is maintained.

With the hedge blade assembly 100 and the lawn blade assembly 200, the direction and amplitude that the pair of shear blades 110, 210 each reciprocates are different. Accordingly, the four cams 61, 62, 63, 64 are individually designed as to their respective diameter and offset distance from the central hole 66 so that each may be appropriately designed for its corresponding pair of shear blades 110, 210.

In this embodiment, the first cam 61 and the second cam 62 have the same diameter, and the offset distance from the central hole 66 is also the same. Meanwhile, the third cam 63 and the fourth cam 64 have diameters differing from one another, but the offset distance from the central hole 66 is the same. In particular, the diameter D4 of the fourth cam 64 is especially small in comparison to that of the other three cams 61, 62, 63.

If the diameters of the third cam 63 and the fourth cam 64 are not the same, the masses of the third cam 63 and the fourth cam 64 will also be different. Thus, the mass balance of the cam member 60 may be failed. Thus, in this embodiment, the thickness D4 of the fourth cam 64 having the smaller diameter is made to be greater than the thickness of the third cam 63 having a greater diameter. Consequently, the mass difference between the third cam 63 and the fourth cam 64 is reduced, and the mass balance of the cam member 60 is thereby improved. As described above, by adjusting the thickness of each cam according to the diameter or the offset distance from the central hole 66 of each cam, the mass balance of the cam member 60 can be improved. Specifically, the thickness should be made smaller for a cam having larger diameter, and also, the thickness should be made smaller for a cam having greater offset distance.

Moreover, a thin-walled portion (depression) 61a, 64a is formed on a part of the respective surface of the first cam 61 and the fourth cam 64. The masses of the first cam 61 and the fourth cam 64 are finely adjusted with the thin-walled portions 61 a, 64a. As described above, by forming the thin-walled portion on one or more cams, the mass of each cam can be adjusted, and the mass balance of the cam member 60 can be finely adjusted. Here, the shape of the thin-walled portions (depressions) 61a, 64a should be a shape into which a person's finger will fit. The operator will thereby be able to easily adjust the direction of the cam member 60 by placing his/her finger on the thin-walled portion (depression) 61 a, 64a upon replacing the blade assemblies 100, 200.

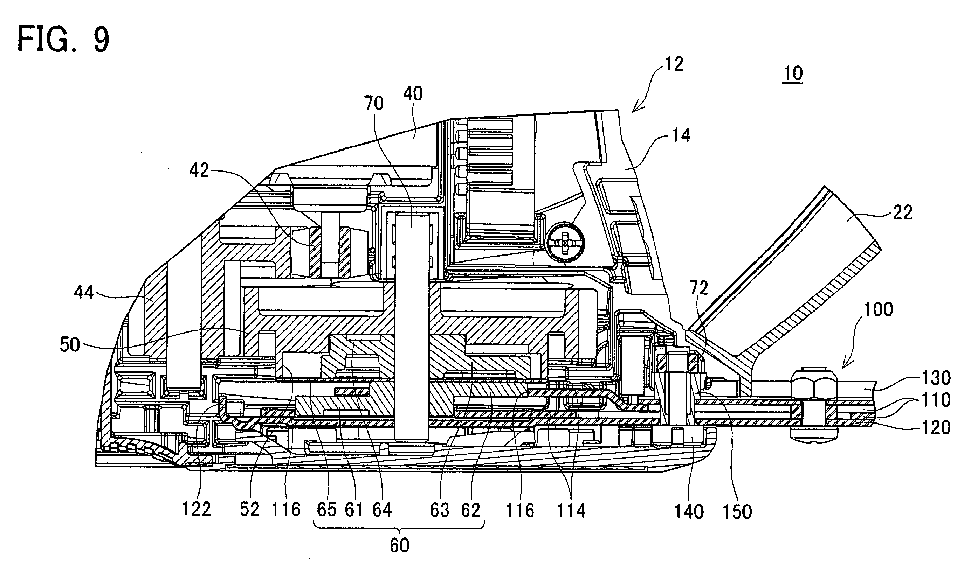

The connection of the cam member 60 and the pair of shear blades 110, 210 is now explained. Fig. 8 shows the pair of shear blades 110 of the hedge blade assembly 100 together with the cam member 60. Fig. 9 shows the hedge blade assembly 100 attached to the main body 12. Foremost, the mode of connecting the cam member 60 and the pair of shear blades 110 of the hedge blade assembly 100 will be explained.

As shown in Fig. 8 and Fig. 9, each of the base end parts 114 of the respective shear blades 100 of the hedge blade assembly 100 is formed with an engaging hole 116 for engaging with the cam member 60. When the hedge blade assembly 100 is attached to the main body 12, the cam member 60 is fixed to the final gear 50 in a first arrangement where the third cam 63 and the fourth cam 64 are positioned on the side of the final gear 50. Consequently, in the case of the hedge blade assembly 100, the first cam 61 engages with the engaging hole 116 of the shear blades 110 positioned at the lower side, and the second cam 62 engages with the engaging hole 116 of the shear blade 110 positioned at the upper side. When the cam member 60 is rotatably driven in the foregoing state, the pair of shear blades 110 will reciprocate so as to move forward and backward relative to the main body 12.

As shown in Fig. 9, when the hedge blade assembly 100 is attached to the main body 12, the third cam 63 and the fourth cam 64 are not used. Thus, the unused third cam 63 and fourth cam 64 are housed in the recess 52 of the final gear 50. The cam member 60 of this embodiment includes four cams 61, 62, 63, 64, and its size is relatively large. Accordingly, by adopting a configuration in which the unused third cam 63 and fourth cam 64 are housed internally of the final gear 50, the space that is required for disposing the cam member 60 can be reduced.

Moreover, the intermediate plate 65 of the cam member 60 comes in contact with the end face of the lower side of the final gear 50 so as to stabilize the posture relative to the final gear 50 of the cam member 60. The generation of undesirable vibration and noise during the operation can thereby be inhibited. In particular, with this embodiment, the posture of the cam member 60 relative to the final gear 50 is extremely stable as a result of the entire periphery of the intermediate plate 65 coming in contact with the final gear 50.

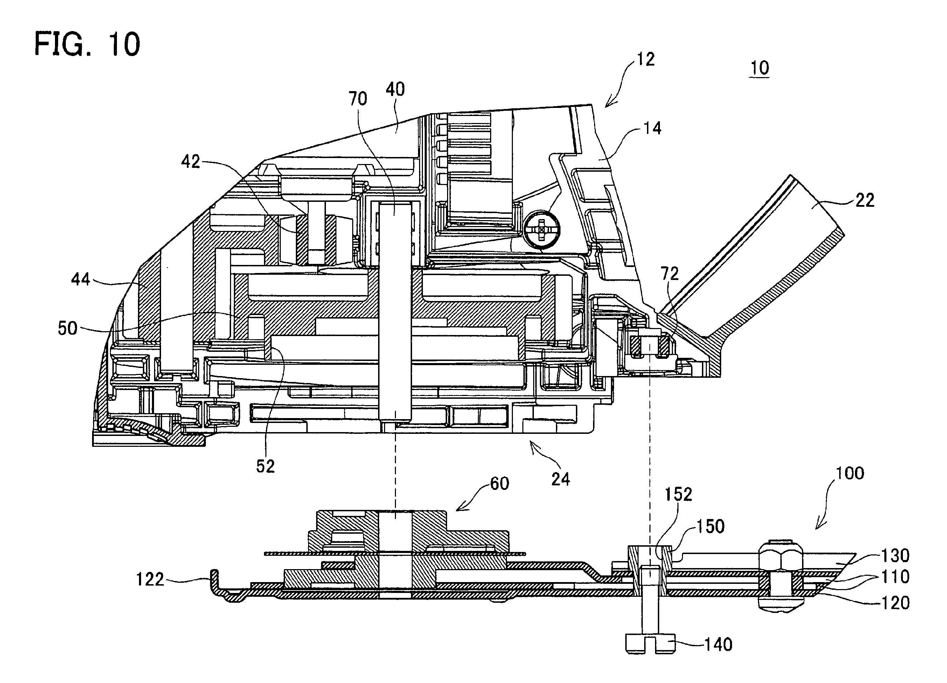

Fig. 10 shows a state in which the hedge blade assembly 100 is removed from the main body 12. When the hedge blade assembly 100 is to be removed, the bottom cover 30 is foremost removed (not shown in Fig. 10), and the fixation screws 140 are subsequently loosened. The hedge blade assembly 100 can thereby be removed downward. Here, the cam member 60 is removed from the main body 12 together with the hedge blade assembly 100. The hedge blade assembly 100 is formed with a bending part 122 at a part thereof so that the lower plate 120 will not interfere with the housing 14. The bending part 122 engages with a part of the main body 12, and is an engagement protrusion for performing the positioning in the horizontal direction. Consequently, by simply tightening the fixation screw 140 positioned in the front side, the bending part 122 positioned rearward will also be engaged with the main body 12, and the hedge blade assembly 100 will thereby be fixed firmly. Moreover, the positioning during the assembly can also be easily performed by the bending part 122 being elongated upward.

As shown in Fig. 10, the hedge blade assembly 100 is provided with a retaining member 150 relative to the respective fixation screws 140. Each of the retaining members 150 has a through-hole 152 for passing the fixation screw 140 therethrough. The retaining members 150 prevent the fixation screw 140 from falling when the hedge blade assembly 100 is removed from the main body 12.

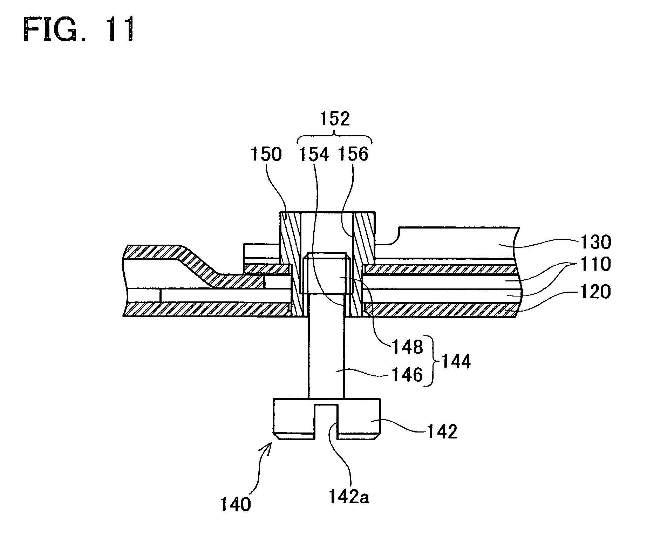

The structure of the fixation screw 140 and the retaining member 150 is now explained with reference to Fig. 11. As shown in Fig. 11, the fixation screw 140 comprises a head part 142 and a shaft part 144. The shaft part 144 is formed with a thin diameter portion 146 and a screw portion 148. The screw portion 148 is screwed into the corresponding nut 72 of the main body 12. The thin diameter portion 146 is positioned toward the side of the head part 142 than the screw portion 148, and its outer diameter is smaller than the outer diameter of the screw portion 148.

Meanwhile, the through-hole 152 of the retaining member 150 is formed with a small diameter portion 154 and a large diameter portion 156. The small diameter portion 154 is engraved with an internal thread of a size corresponding to the screw portion 148 of the fixation screw 140. Here, the inner diameter of the small diameter portion 154 is smaller than the outer diameter of the screw portion 148 of the fixation screw 140. Accordingly, the screw portion 148 of the fixation screw 140 is unable to directly pass the small diameter portion 154 therethrough. The fixation screw 140 is thereby prevented from falling. In addition, if necessary, the fixation screw 140 can be rotated in order to remove the fixation screw 140 from the hedge blade assembly 100.

As shown in Fig. 9, each retaining member 150 comes in contact with both the hedge blade assembly 100 and the nut 72 of the main body 12 in a state where the hedge blade assembly 100 is attached to the main body 12. Consequently, even if the fixation screw 140 is tightened firmly, it is possible to prevent the hedge blade assembly 100 from warping. In a state where the hedge blade assembly 100 is warped, a heavy load is applied to the reciprocating pair of shear blades 102, and problems such as abnormal heat generation and damage of the hedge blade assembly 100 may occur. The retaining members 150 of this embodiment do not simply prevent the deformation of the hedge blade assembly 100, but also prevent problems such as abnormal heat generation and damage of the hedge blade assembly 100 that may occur due to its deformation.

However, if the configuration in which the retaining member 150 comes in contact with both the hedge blade assembly 100 and the main body 12b is adopted, the respective screw portion 148 of the fixation screw 140 will interfere with the retaining member 150 upon tightening or loosening the fixation screw 140. If the screw portions 148 of the fixation screws 140 interfere with the retaining members 150, the position of the hedge blade assembly 100 will be unstable, and the process of attaching or detaching the blade assembly 100 will become troublesome.

Thus, with the retaining member 150 of this embodiment, a large diameter portion 156 is formed at a part of the respective through-hole 152. As shown in Fig. 11, the large diameter portion 156 extends to the tip part on the side of the main body 12, and its inner diameter is greater than the outer diameter of the screw portion 148 of the corresponding fixation screw 140. According to this configuration, since the screw portion 148 of the fixation screw 140 will enter and exit the large diameter portion 156 upon tightening and loosening the fixation screw 140, it is possible to prevent the screw portion 148 from interfering with the retaining member 150. In particular, the large diameter portions 156 of this embodiment are each formed to be sufficiently longer than the screw portion 148 of the corresponding fixation screw 140, and configured so that they are able to completely house the screw portion 148 of the fixation screw 140.

In this embodiment, as described above, the fixation screws 140 can be tightened and loosened without having to use a tool such as a screw driver. Specifically, a linear groove 142a that extends in a straight line is formed at the head part 142 of each fixation screw 140, and a coin-shaped member such as a coin or a medal can be inserted into the linear groove 142a. The shape of the linear groove 142a is also shown in Fig. 1. According to this configuration, the user is able to tighten or loosen the fixation screw 140 with a coin or the like in hand without having to carry around a tool such as a screw driver. Consequently, with the gardening trimmer 10 of this embodiment, a tool is not required upon replacing the blade assemblies 100, 200.

The mode of connecting the cam member 60 and the pair of shear blades 210 of the lawn blade assembly 200 will now be explained.

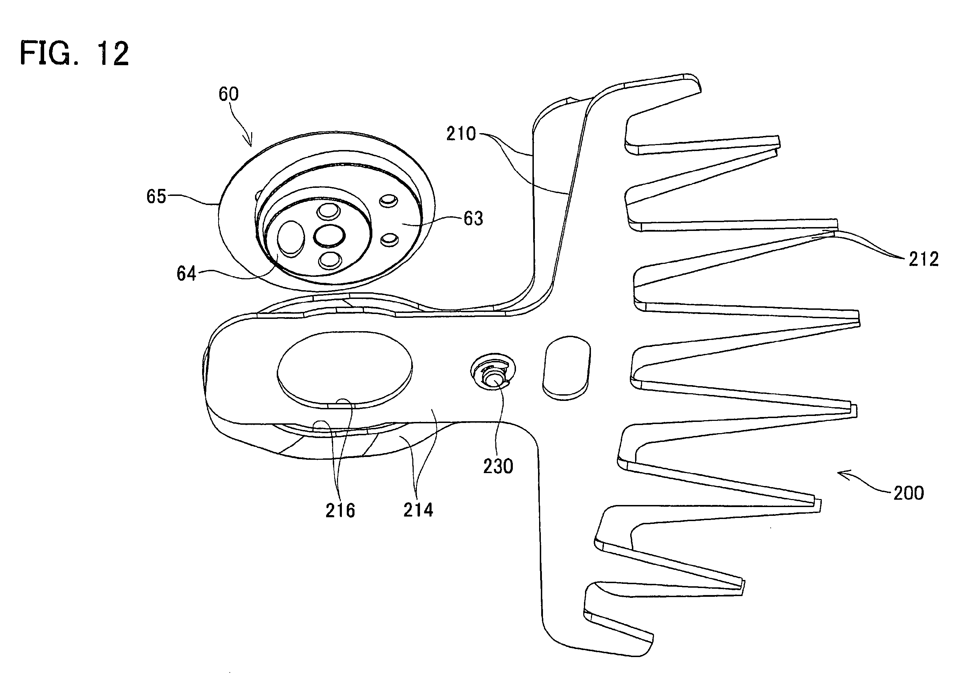

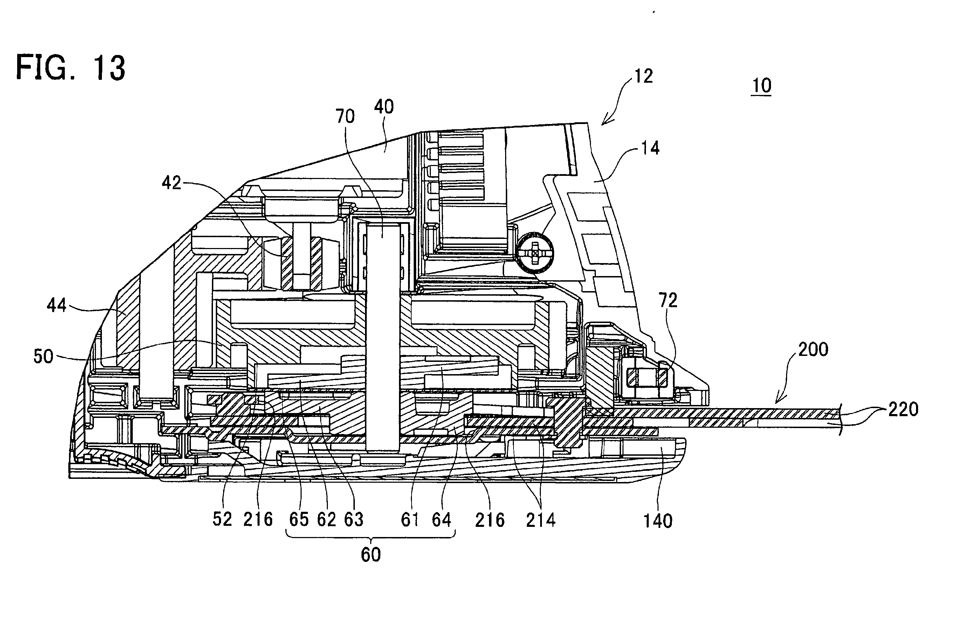

As shown in Fig. 12 and Fig. 13, an engaging hole 216 for engaging with the cam member 60 is formed at the base end part 214 of the respective shear blades 210 of the lawn blade assembly 200. When the lawn blade assembly 200 is attached to the main body 12, the cam member 60 is fixed to the final gear 50 in a second arrangement where the first cam 61 and the second cam 62 are positioned on the side of the final gear 50. Consequently, in the case of the lawn blade assembly 200, the fourth cam 64 engages with the engaging hole 216 of the shear blade 210 positioned at the lower side and the third cam 63 engages with the engaging hole 216 of the shear blade 210 positioned at the upper side. When the cam member 60 is rotatably driven in the foregoing state, the pair of shear blades 210 will reciprocate in the swinging manner relative to the main body 12.

As shown in Fig. 13, when the lawn blade assembly 200 is attached to the main body 12, the first cam 61 and the second cam 62 are not used and these are housed in the recess 52 of the final gear 50. Here, the recess 52 of the final gear 50 is formed with a housing portion 52a corresponding to the shape of the first cam 61 and the second cam 62, and a housing portion 52b corresponding to the shape of the third cam 63 and the fourth cam 64. Consequently, even if the first cam 61 and the second cam 62 are housed in the recess 52 of the final gear 50, the intermediate plate 65 of the cam member 60 will come in contact with the end face at the lower side of the final gear 50. Regardless of the arrangements of the cam member 60, the cam member 60 is stably fixed to the final gear 50.

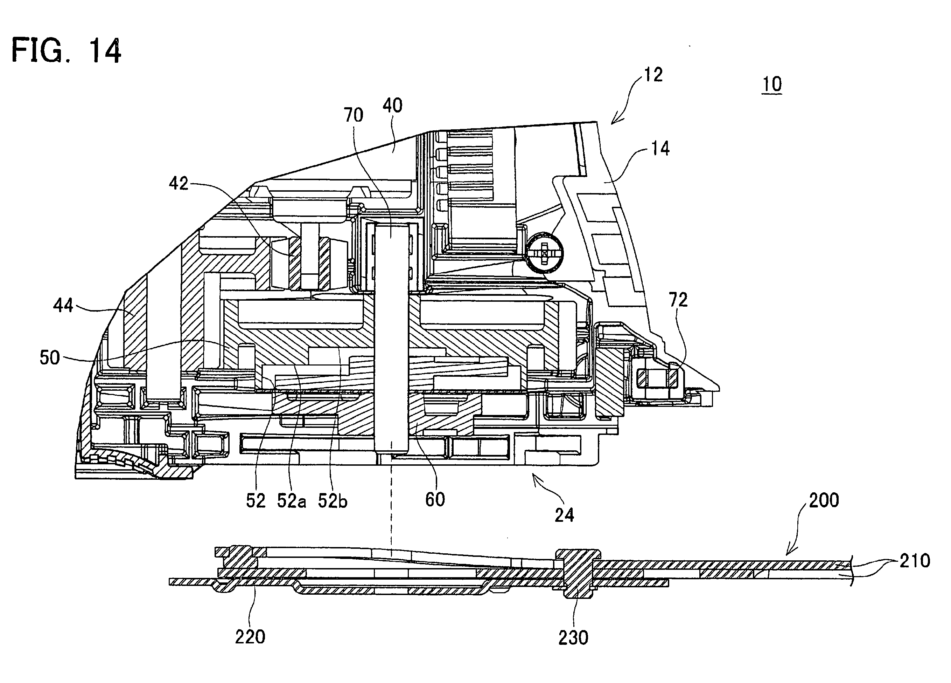

Fig. 14 shows a state where the lawn blade assembly 200 is removed from the main body 12. When removing the lawn blade assembly 200, the lawn blade assembly 200 can be removed downward simply by removing the bottom cover 30 (not shown in Fig. 14). The lawn blade assembly 200 can be removed with the cam member 60 still fixed to the final gear 50.

As described above, with the gardening trimmer 10 of this embodiment, four cams are provided to the cam member 60, and these cams are disposed in a well balanced manner. Thus, the mass balance of the cam member 60 is favorably maintained. Moreover, the thickness of the cam is adjusted according to its diameter, and the thin-walled portion is selectively formed as needed. Thus, the mass balance of the cam member 60 is further improved. According to these structures, the generation of undesirable vibration and noise can be inhibited upon operating the gardening trimmer 10.

Moreover, with the gardening trimmer 10 of this embodiment, on the assumption that the blade assemblies 100, 200 are frequently replaced, measures for preventing the loss of the fixation screws 140 of the hedge blade assembly 100 are taken. In addition, upon exchanging the blade assemblies 100, 200, a structure is adopted in which a tool such as a screw driver is not required, and the replacement operation can be performed easily.

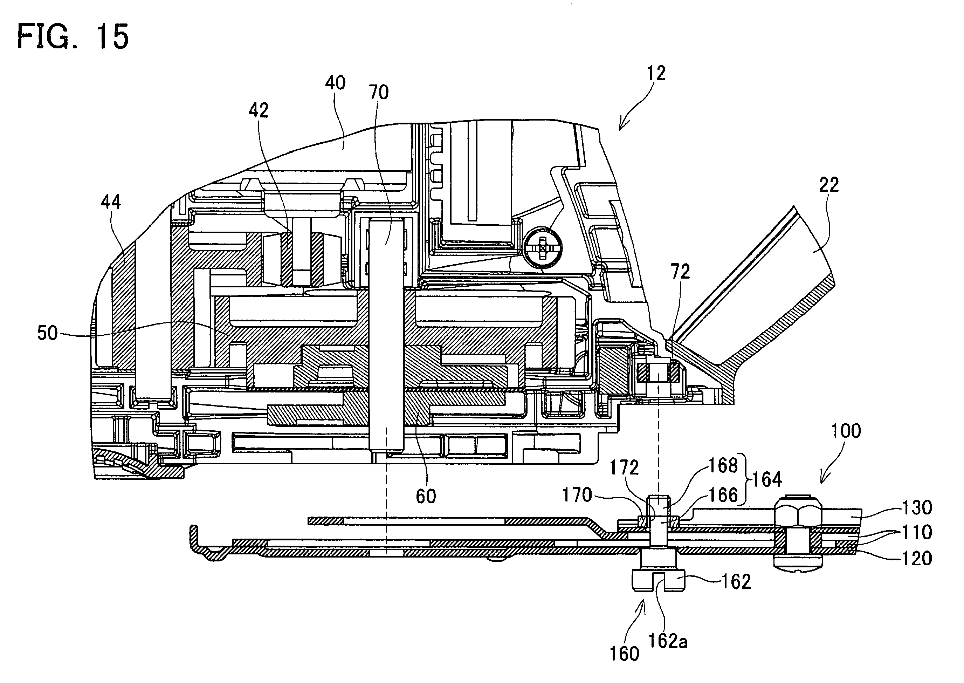

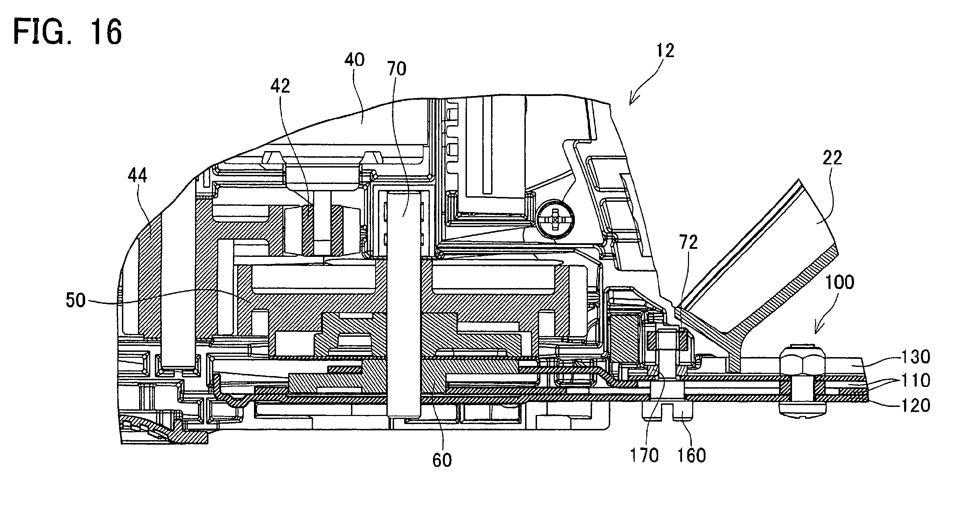

Here, the structure of preventing the loss of the fixation screws 140 is shown with a fixation screw 160 and a retaining member 170 of a modified example illustrated in Fig. 15 and Fig. 16. The fixation screw 160 comprises a head part 162 and a shaft part 164. The head part 162 is similarly formed with a linear groove 162a. The shaft part 164 is similarly formed with a thin diameter portion 166 and a screw portion 168.

Meanwhile, the retaining member 170 is shorter than the retaining member 150 explained above. A through-hole 172 of the retaining member 170 is engraved with an internal thread of a size corresponding to the screw portion 168 of the fixation screw 160, and its inner diameter is smaller than the outer diameter of the screw portion 168. The fixation screw 160 is thereby prevented from falling. In addition, if necessary, the fixation screw 160 can be rotated in order to remove the fixation screw 160 from the hedge blade assembly 100.

Fig. 16 shows a state where the hedge blade assembly 100 is attached to the main body 12 using the fixation screw 160 and the retaining member 170 of the modified example. As shown in Fig. 16, since the length of the retaining member 170 has been shortened, a space is formed between the nut 72 and the retaining member 170, and the retaining member 170 does not come in contact with the nut 72 but rather comes in contact with another part of the main body 12. As described above, the retaining member 170 of the modified example has a simple structure, and can also be configured from a general-purpose nut or the like.

## Claims

1. A gardening trimmer (10) comprising:
a main body (12);
a prime mover (40) disposed in the main body;
a first type blade assembly (100) and a second type blade assembly (200), each comprising a pair of shear blades (110, 210) and configured to be detachably attached to the main body in substitute of the other; and
a cam member (60) configured to be rotatably driven by the prime mover (40) and causes the pair of shear blades (110, 210) of the first or second type blade assembly (100, 200) attached to the main body to reciprocate;
**characterized in that**:
the cam member (60) comprises a first cam (61), a second cam (62), a third cam (63) and a fourth cam (64),
the first and second cams (61, 62) are configured to be connected with the pair of shear blades (110) of the first type blade assembly (100) when the first type blade assembly (100) is attached to the main body (12), and
the third and fourth cams (63, 64) are configured to be connected with the pair of shear blades (210) of the second type blade assembly (200) when the second type blade assembly (200) is attached to the main body (12).

2. A gardening trimmer (10) as in claim 1, wherein at least one of the first, second, third and fourth cams (61, 62, 63, 64) has a smaller diameter and a greater thickness than at least one of the other cams.

3. A gardening trimmer (10) as in claim 1 or 2, wherein
the main body (12) comprises a rotation member (50) configured to be rotatably driven by the prime mover (40),
the cam member (60) is coaxially fixed to an end face of the rotation member (50) in a first arrangement in which the third and fourth cams (63, 64) face the rotation member (50) when the first type blade assembly (100) is attached to the main body (12), and
the cam member (60) is coaxially fixed to the end face of the rotation member (50) in a second arrangement in which the first and second cams (61, 62) face to the rotation member (50) when the second type blade assembly (200) is attached to the main body (12).

4. A gardening trimmer (10) as in claim 3, wherein the rotation member (50) comprises a recess (52) formed on the end face and is configured to:
house the third and fourth cams (63, 64) within the recess (52) when the cam member (60) is fixed to the rotation member (50) in the first arrangement and
house the first and second cams (61, 62) within the recess (52) when the cam member (60) is fixed to the rotation member in the second arrangement.

5. A gardening trimmer (10) as in claim 3 or 4, wherein
the cam member (60) further comprises a plate member (65) configured to contact with the end face of the rotation member (50) when the cam member (60) is fixed to the rotation member (50) in any one of the first and second arrangements.

6. A gardening trimmer (10) as in any one of claims 1 to 5, wherein a thin-walled portion (61 a, 64a) is partly formed in at least one of the first, second, third and fourth cams (61, 62, 63, 64).

7. A gardening trimmer (10) as in any one of claims 1 to 6, wherein
the first and second cams (61, 62) are arranged at opposite sides of each other with respect to a rotation center of the cam member (60), and
the third and fourth cams (63, 64) are arranged at opposite sides of each other with respect to the rotation center of the cam member (60).

8. A gardening trimmer (10) as in claim 7, wherein
one of the first and second cams (61, 62) and one of the third and fourth cams (63, 64) are arranged at a same side with respect to the rotation center of the cam member (60), and
the other of the first and second cams (61, 62) and the other of the third and fourth cams (63, 64) are arranged at a same side with respect to the rotation center of the cam member (60).

9. A gardening trimmer (10) as in claim 7, wherein the first, second, third and fourth cams (61, 62, 63, 64) are arranged equiangularly with respect to the circumferential direction of the cam member (60).

## Patentansprüche

1. Gartentrimmer (10) mit
einem Hauptkörper (12),
einem Antriebsmotor (40), der in dem Hauptkörper angeordnet ist,
einer Messergruppe erster Art (100) und einer Messergruppe zweiter Art (200), die jeweils ein Paar von Schneidmessern (110, 210) aufweisen und konfiguriert, sind lösbar an dem Hauptkörper in Ersatz der anderen befestigt zu werden, und
einem Nockenbauteil (60), das konfiguriert ist, durch den Antriebsmotor (40) drehend angetrieben zu werden und das Paar von Schneidmessern (110, 210) der Messergruppe der ersten oder zweiten Art (100, 200), das an den Hauptkörper befestigt ist, zu veranlassen, sich hin und her zu bewegen,
**dadurch gekennzeichnet, dass**
das Nockenbauteil (60) eine erste Nocke (61), ein zweite Nocke (62), eine dritte Nocke (63) und eine vierte Nocke (64) aufweist,
die erste und zweite Nocke (61, 62) konfiguriert sind, mit dem Paar von Schneidmessern (110) der Messergruppe der ersten Art (100) verbunden zu werden, wenn die Messergruppe der ersten Art (100) an den Hauptkörper (12) befestigt ist, und
die dritte und vierte Nocke (63, 64) konfiguriert sind, mit dem Paar von Schneidmessern (210) der Messergruppe der zweiten Art (200) verbunden zu werden, wenn die Messergruppe der zweiten Art (200) an den Hauptkörper (12) befestigt ist.

2. Gartentrimmer (10) nach Anspruch 1, bei dem zumindest eine von der ersten, zweiten, dritten und vierten Nocke (61, 62, 63, 64) einen kleineren Durchmesser und eine größere Dicke als zumindest eine der anderen Nocken hat.

3. Gartentrimmer (10) nach Anspruch 1 oder 2, bei dem
der Hauptkörper (12) ein Drehbauteil (50) aufweist, das konfiguriert ist, drehend durch den Antriebsmotor (40) angetrieben zu werden,
das Nockenbauteil (60) an eine Endfläche des Drehbauteils (50) in einer ersten Anordnung koaxial befestigt ist, in welcher die dritte und vierte Nocke (63, 64) dem Drehbauteil (50) gegenüberliegen, wenn die Messergruppe der ersten Art (100) an dem Hauptkörper (12) befestigt ist, und
das Nockenbauteil (60) an die Endfläche des Drehbauteils (50) in einer zweiten Anordnung koaxial befestigt ist, in welcher die erste und zweite Nocke (61, 62) dem Drehbauteil (50) gegenüberliegen, wenn die Messergruppe der zweiten Art (200) an den Hauptkörper (12) befestigt ist.

4. Gartentrimmer (10) nach Anspruch 3, bei dem das Drehbauteil (50) eine Ausnehmung (52) aufweist, die in der Endfläche gebildet ist und konfiguriert ist,
die dritte und vierte Nocke (63, 64) innerhalb der Ausnehmung (52) aufzunehmen, wenn das Nockenbauteil (60) an das Drehbauteil (50) in der ersten Anordnung befestigt ist, und
die erste und zweite Nocke (61, 62) innerhalb der Ausnehmung (52) aufzunehmen, wenn das Nockenbauteil (60) an das Drehbauteil in der zweiten Anordnung befestigt ist.

5. Gartentrimmer (10) nach Anspruch 3 oder 4, bei dem
das Nockenbauteil (60) weiter ein Plattenbauteil (65) aufweist, das konfiguriert ist, die Endfläche des Drehbauteils (50) zu berühren, wenn das Nockenbauteil (60) an das Drehbauteil (50) in irgendeiner der ersten und zweiten Anordnung befestigt ist.

6. Gartentrimmer (10) nach einem der Ansprüche 1 bis 5, bei dem ein dünnwandiger Teil (61a, 64a) teilweise in zumindest einer der ersten, zweiten, dritten und vierten Nocke (61, 62, 63, 64) gebildet ist.

7. Gartentrimmer (10) nach einem der Ansprüche 1 bis 6, bei dem
die erste und zweite Nocke (61, 62) an gegenüberliegenden Seiten zueinander mit Bezug auf ein Drehzentrum des Nockenbauteils (60) angeordnet sind, und
die dritte und vierte Nocke (63, 64) an gegenüberliegenden Seiten zueinander mit Bezug auf das Drehzentrum des Nockenbauteils (60) angeordnet sind.

8. Gartentrimmer (10) nach Anspruch 7, bei dem
einer der ersten und zweiten Nocke (61, 62) und eine der dritten und vierten Nocke (63, 64) an einer gleichen Seite mit Bezug auf das Drehzentrum des Nockenbauteils (60) angeordnet sind, und
die andere der ersten und zweiten Nocke (61, 62) und die andere der dritten und vierten Nocke (63, 64) an einer gleichen Seite mit Bezug auf das Drehzentrum des Nockenbauteils (60) angeordnet sind.

9. Gartentrimmer (10), nach Anspruch 7, bei dem die erste, zweite, dritte und vierte Nocke (61, 62, 63, 64) mit Bezug auf die Umfangsrichtung des Nockenbauteils (60) gleichwinklig angeordnet sind.

## Revendications

1. Taille-haie (10), comprenant :
un corps principal (12) ;
un moteur primaire (40) disposé dans le corps principal ;
un ensemble de lames de premier type (100) et un ensemble de lames de second type (200), chacun comprenant une paire de lames de cisaille (110, 210) et étant configuré pour être fixé de façon séparable au corps principal en remplacement de l'autre ; et
un élément came (60) configuré pour être entraîné de façon rotative par le moteur primaire (40) et entraînant le déplacement en va-et-vient de la paire de lames de cisaille (110, 210) de l'ensemble de lames de premier type ou de second type (100, 200) fixé au corps principal ;
**caractérisé en ce que** :
l'élément came (60) comprend une première came (61), une deuxième came (62), une troisième came (63) et une quatrième came (64),
les première et deuxième cames (61, 62) sont configurées pour être reliées à la paire de lames de cisaille (110) de l'ensemble de lames de premier type (100) lorsque l'ensemble de lames de premier type (100) est fixé au corps principal (12), et
les troisième et quatrième cames (63, 64) sont configurées pour être reliées à la paire de lames de cisaille (210) de l'ensemble de lames de second type (200) lorsque l'ensemble de lames de second type (200) est fixé au corps principal (12).

2. Taille-haie (10) selon la revendication 1, dans lequel au moins une des première, deuxième, troisième et quatrième cames (61, 62, 63, 64) possède un diamètre inférieur et une épaisseur supérieure à celles d'au moins une des autres cames.

3. Taille-haie (10) selon la revendication 1 ou 2, dans lequel
le corps principal (12) comprend un élément de rotation (50) configuré pour être entraîné de façon rotative par le moteur primaire (40),
l'élément came (60) est fixé de façon coaxiale à une face d'extrémité de l'élément de rotation (50) dans un premier agencement dans lequel les troisième et quatrième cames (63, 64) font face à l'élément de rotation (50) lorsque l'ensemble de lames de premier type (100) est fixé au corps principal (12), et
l'élément came (60) est fixé de façon coaxiale à la face d'extrémité de l'élément de rotation (50) dans un second agencement dans lequel les première et deuxième cames (61, 62) font face à l'élément de rotation (50) lorsque l'ensemble de lames de second type (200) est fixé au corps principal (12).

4. Taille-haie (10) selon la revendication 3, dans lequel l'élément de rotation (50) comprend un évidement (52) formé sur la face d'extrémité et est configuré pour :
loger les troisième et quatrième cames (63, 64) à l'intérieur de l'évidement (52) lorsque l'élément came (60) est fixé à l'élément de rotation (50) dans le premier agencement et
loger les première et deuxième cames (61, 62) à l'intérieur de l'évidement (52) lorsque l'élément came (60) est fixé à l'élément de rotation dans le second agencement.

5. Taille-haie (10) selon la revendication 3 ou 4, dans lequel l'élément came (60) comprend en outre un élément plaque (65) configuré pour entrer en contact avec la face d'extrémité de l'élément de rotation (50) lorsque l'élément came (60) est fixé à l'élément de rotation (50) dans un quelconque des premier et second agencements.

6. Taille-haie (10) selon l'une quelconque des revendications 1 à 5, dans lequel une partie à paroi mince (61a, 64a) est partiellement formée dans au moins une des première, deuxième, troisième et quatrième cames (61, 62, 63, 64).

7. Taille-haie (10) selon l'une quelconque des revendications 1 à 6, dans lequel
les première et deuxième cames (61, 62) sont agencées sur des côtés opposés l'un à l'autre par rapport à un centre de rotation de l'élément came (60), et
les troisième et quatrième cames (63, 64) sont agencées sur des côtés opposés l'un à l'autre par rapport au centre de rotation de l'élément came (60).

8. Taille-haie (10) selon la revendication 7, dans lequel une des première et deuxième cames (61, 62) et une des troisième et quatrième cames (63, 64) sont agencées sur un même côté par rapport au centre de rotation de l'élément came (60), et
l'autre des première et deuxième cames (61, 62) et l'autre des troisième et quatrième cames (63, 64) sont agencées sur un même côté par rapport au centre de rotation de l'élément came (60).

9. Taille-haie (10) selon la revendication 7, dans lequel les première, deuxième, troisième et quatrième cames (61, 62, 63, 64) sont agencées de façon équiangle par rapport à la direction circonférentielle de l'élément came (60).
